Europäisches Patentamt

European Patent Office

Office européen des brevets

(11) Veröffentlichungsnummer: **0 135 213**
**B1**

(12) EUROPÄISCHE PATENTSCHRIFT

(45) Veröffentlichungstag der Patentschrift:
01.03.89

(51) Int. Cl.⁴: **H 01 G 9/02**

(21) Anmeldenummer: 84201021.7

(22) Anmeldetag: 11.07.84

(54) Elektrolytischer Kondensator.

(30) Priorität: 18.07.83 NL 8302559

(43) Veröffentlichungstag der Anmeldung:
27.03.85 Patentblatt 85/13

(45) Bekanntmachung des Hinweises auf die Patenterteilung:
01.03.89 Patentblatt 89/9

(84) Benannte Vertragsstaaten:
DE FR GB IT NL SE

(56) Entgegenhaltungen:
DE-B- 1 158 635
DE-B- 1 263 932
GB-A- 928 033

(73) Patentinhaber: N.V. Philips' Gloeilampenfabrieken,
Groenewoudseweg 1, NL-5621 BA Eindhoven (NL)

(72) Erfinder: Eijkelenkamp, Antonius Johannes Henricus,
INT. OCTROOIBUREAU B.V. Prof. Holstlaan 6,
NL-5656 AA Eindhoven (NL)
Erfinder: Held, Jan Hermannes, INT. OCTROOIBUREAU
B.V. Prof. Holstlaan 6, NL-5656 AA Eindhoven (NL)
Erfinder: Rientjes, Gerardus Johannes Antonius, INT.
OCTROOIBUREAU B.V. Prof. Holstlaan 6, NL-5656 AA
Eindhoven (NL)

(74) Vertreter: Auwerda, Cornelis Petrus et al,
INTERNATIONAAL OCTROOIBUREAU B.V. Prof.
Holstlaan 6, NL-5656 AA Eindhoven (NL)

ACTORUM AG

Beschreibung

Die Erfindung bezieht sich auf einen elektrolytischen Kondensator mit einer im wesentlichen nicht wäßrigen Füllelektrolytlösung mit einem niedrigen spezifischen Widerstand, der sich zum Gebrauch bis hohe Arbeitsspannungen eignet.

Eine Füllelektrolytlösung für Elektrolytkondensatoren soll einer Anzahl wichtigen Anforderungen entsprechen.

Die Lösung soll imstande sein, die auf der Anode durch Formierung angebrachte dielektrische Oxidhaut bei angelegter Spannung beizubehalten. Insbesondere bei hoher Spannung, beispielsweise 385 V, dürfen keine elektrischen Durchschläge auftreten: die Funkenspannung oder Durchschlagspannung der Lösung soll hoch genug sein.

Der spezifische Widerstand der Elektrolytlösung soll niedrig sein, weil dieser zu dem äquivalenten Reihenwiderstand (esr, gemessen bei 100 Hz) und insbesondere zu der Impedanz Z, gemessen bei höheren Frequenzen von 10 bis 100 kHz beiträgt.

In der Praxis stellte es sich bisher heraus, daß die Eigenschaften einer hohen Durchschlagspannung und eines niedrigen spezifischen Widerstandes in ein und derselben Elektrolytlösung schwer verwirklichbar waren. Aus diesen Gründen war es üblich, unterschiedliche Lösungen für die jeweiligen Spannungsbereiche zu benutzen. So weisen bekannte Lösungen zum Gebrauch in Elektrolytkondensatoren von 385–400 V einen spezifischen Widerstand von 1000–2000 Ohm.cm bei 20 °C oder noch höher auf.

Neuartige Anwendungsbereiche von Elektrolytkondensatoren erfordern eine Verringerung der dielektrischen Verluste. Insbesondere die Impedanz Z bei 10–100 kHz soll niedrig sein, u.a. um eine ausreichende Belastbarkeit für überlagerten Wechselstrom zu gewährleisten.

Aus der deutschen Offenlegungsschrift 15 89 671 ist beispielsweise ein Kondensator bekannt, der eine Elektrolytlösung enthält mit einem oder mehreren aprotischen dipolaren Lösungsmitteln, worin ein Amin und eine oder mehrere Säuren gelöst sind. Die genannten Lösungen gehören zu denjenigen, die die gewünschte Kombination von Eigenschaften nicht aufweisen.

Die Erfindung hat nun zur Aufgabe, einen elektrolytischen Kondensator mit einer Elektrolytlösung zu schaffen, die eine Verwendung des Kondensators bis zu hohen Betriebsspannungen, von 385–400 V, mit niedrigen elektrischen Verlusten ermöglicht, und die bis zu hohen Temperaturen chemisch stabil ist, wodurch der Kondensator elektrisch stabil ist.

Nach der Erfindung ist ein Elektrolytkondensator mit einer durch anodische Oxydation mit einer dielektrischen Oxidschicht versehenen Anode, einer Kathode, einem Abstandshalter und einer Elektrolytlösung, bestehend aus einer Lösung eines Salzes eines Amins mit einer organischen Carbonsäure und Borsäure in einem Lösungsmittel, bestehend aus einer oder mehreren dipolaren aprotischen Verbindungen, wobei das Lösungsmittel aus einem oder mehreren mono- oder dialkylierten Amiden von Carbonsäuren mit 1, 2 oder 3 Kohlenstoffatomen besteht, dadurch gekennzeichnet, daß in dem Lösungsmittel ein Amin in einer Menge von mindestens 0,20 Mol/kg Lösungsmittel, Essigsäure und/oder Propionsäure in einer Menge von mindestens 0,20 Mol/kg Lösungsmittel und Borsäure in einer Menge von mindestens 0,01 Mol/kg Lösungsmittel gelöst sind, wobei das Amin in einer Menge zwischen nahezu 0,25 bis 1,5 mal der Anzahl Äquivalenten der Essigsäure und/oder der Propionsäure und die Borsäure in einer Menge, die höchstens etwa gleich dem Fünffachen der Anzahl Äquivalenten der Essigsäure und/oder der Propionsäure vorhanden ist, dies und jenes derart, daß eine Leitfähigkeit von mindestens 1 mS/cm bei 25 °C erreicht wird.

Die Elektrolytkombination in der Lösung nach der Erfindung weist ein überraschendes Verhalten in der Leitfähigkeit auf. Bei der konduktometrischen Titrierung der Essigsäure und/oder der Propionsäure mit dem Amin stellt es sich heraus, daß bei einer Menge weniger als 1 Äquivalente bei den für Elektrolytkondensatoren interessanten Konzentrationen von 0,1–1 Mol. der Essigsäure und/oder der Propionsäure eine maximale Leitfähigkeit auftritt. Wird nun die Titrierung nach Beendigung mit Borsäure fortgesetzt, so steigt die Leitfähigkeit weiter bis ein zweites Maximum auftritt nach Hinzufügung einer Menge Borsäure, die der Anzahl Äquivalenten der Essigsäure, mit der gestartet wurde, entspricht.

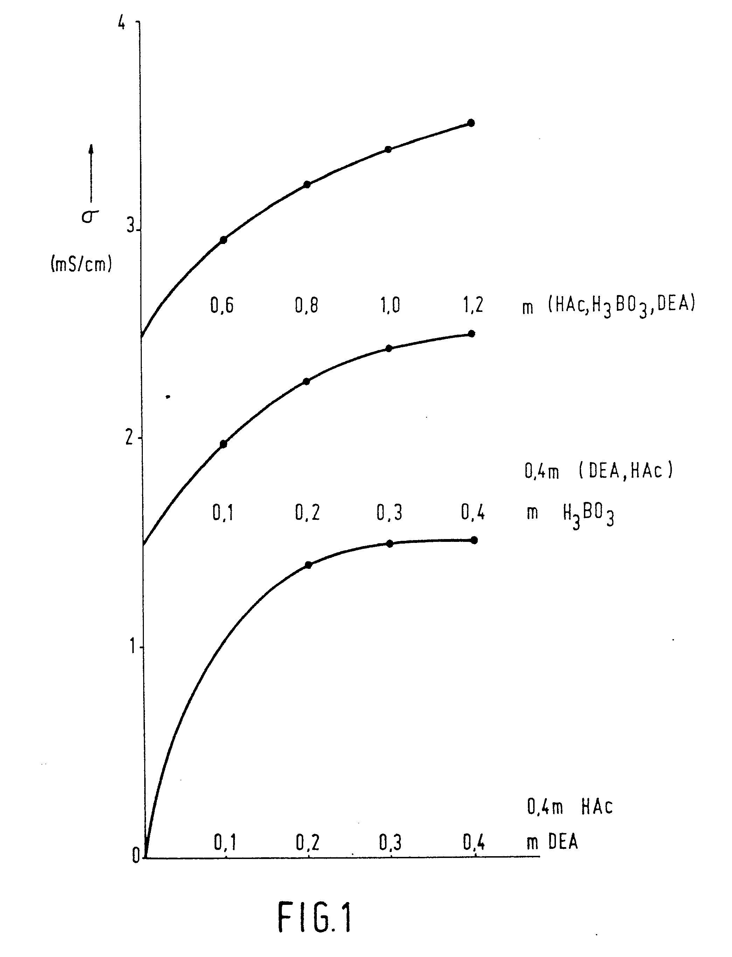

In den graphischen Darstellungen der Fig. 1 ist dieses Phänomen erläutert. Gestartet wird mit einer 0,4 Mol. Essigsäure-(HAc)-Lösung in einem Gemisch aus N,N-Dimethylacetamid und N-Monomethylacetamid in einem Mol.-Verhältnis 4 : 1. In der unteren graphischen Darstellung wird mit Diäthylamin (DEA) titriert, von der die Menge auf der horizontalen Achse aufgetragen ist. In der mittleren Graphik wird mit Borsäure (H₃BO₃) weiter titriert. Die obere Graphik zeigt eine Erhöhung der Gesamtkonzentration mit Diäthylamin, Essigsäure und Borsäure in demselben Mol.-Verhältnis von 0,4 bis 1,2 Mol. Auf der vertikalen Achse ist die Leitfähigkeit (6) in mS/cm aufgetragen. Die Temperatur ist jeweils 25 °C. Die spezifische Leitfähigkeit der Lösung nach der Erfindung gelangt dadurch bei Konzentrationen von 0,4 Mol. auf den besonders hohen Wert von etwa 2,5 mS/cm und bei 1,2 Mol. auf einen Wert von 3,5 mS/cm. Dies entspricht spezifischen Widerständen von 400 bzw. 300 Ohm.cm bei 25 °C.

Die im Rahmen der Erfindung zu verwendenden Amine bestehen aus praktischen Erwägungen vorzugsweise aus aliphatischen Aminen, abgeleitet von Kohlenwasserstoffen mit 1 bis 4 Kohlenstoffatomen.

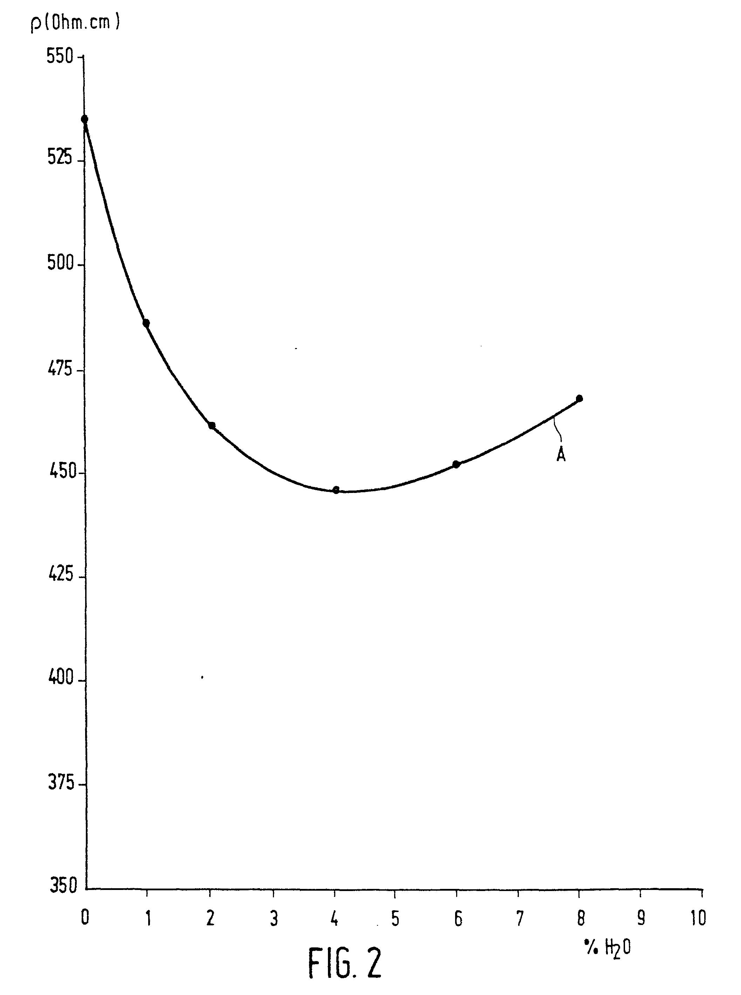

Nach einer bevorzugten Ausführungsform enthält die Elektrolytlösung bis 10 Gew.% vorzugsweise 4 Gew.%, Wasser. Der spezifische Widerstand der Lösung nimmt dadurch etwas ab, und die Durchschlagspannung der Lösung wird dadurch günstig beeinflußt. In Fig. 2 wird der spezifische Widerstand ρ als Funktion des Wasserge-

halts in Gew.% für die untenstehend definierte Lösung A dargestellt.

Bevorzugt, was das Lösungsmittel anbelangt, wird ein Gemisch aus N,N-Dimethylacetamid und Monomethylacetamid mit 15–50 Gew.% N-Monomethylacetamid. Die damit zusammengestellten Lösungen sind bis −55 °C verwendbar.

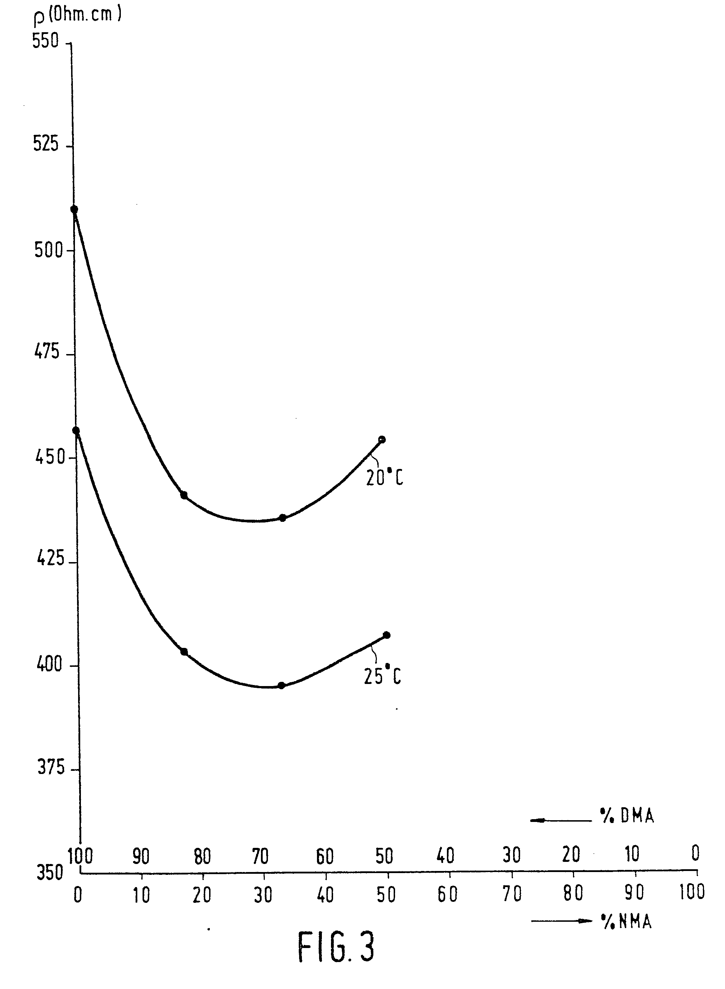

Zur Erläuterung wird in Fig. 3 der spezifische Widerstand von Lösungen mit Essigsäure, Borsäure und Dimethylamin je in einer Menge von 0,4 Mol./kg Lösungsmittel in Gemischen von N-Monomethylacetamid (NMA) und N-N-Dimethylacetamid (DMA) mit 4 Gew.% Wasser als Funktion des Anteils an NMA in Gew.% dargestellt.

Propionsäure, die in den Lösungen nach der Erfindung statt Essigsäure benutzt werden kann, ergibt eine etwas niedrigere Leitfähigkeit. Buttersäure und Isobuttersäure und Carbonsäuren mit noch längeren Ketten ergeben Leitfähigkeiten, die im Rahmen der Erfindung unbrauchbar sind.

Die Elektrolytlösungen in dem Elektrolytkondensator nach der Erfindung haben eine erstaunlich große Stabilität. Die Lebensdauer dieser Kondensatoren ist derart, daß sie einen Test bei 150 °C während 1500 Stunden bestehen. Dadurch, daß der Elektrolytlösung ein gegebenenfalls an sich bekanntes Oxydationsmittel, wie eine aromatische Nitroverbindung, hinzugefügt wird, wird nötigenfalls die meistens auftretende Gasentwicklung unterdrückt.

Als Beispiel folgt nun die Beschreibung einiger Lösungen (A, B, C, D und E) für Elektrolytkondensatoren nach der Erfindung und die erhaltenen Daten einer Dauerprobe der mit den Lösungen versehenen Kondensatoren im Vergleich zu einer bekannten Lösung (F). In der untenstehenden Tafel 1 werden die folgenden Abkürzungen benutzt:

DMA = N,N-Dimethylacetamid
NMA = N'-Monomethylacetamid
DMF = N,N-Dimethylformamid
APB = Ammoniumpentaborat.

TAFEL 1

| Komponenten | A Gew. % | Mol/ kg Lösm. | B Gew. % | Mol/ kg Lösm. | C Gew. % | Mol/ kg Lösm. | D Gew. % | Mol/ kg Lösm. | E Gew. % | Mol/ kg Lösm. | F Gew. % |
|---|---|---|---|---|---|---|---|---|---|---|---|
| DMA | 73,6 | | 62,2 | | | | 69,6 | | 68,3 | | 66,5 |
| NMA | 15,5 | | 13,1 | | | | 14,6 | | 14,3 | | |
| DMF | | | | | 75,3 | | | | | | |
| Äthylenglykol | | | | | | | | | | | 22,5 |
| Essigsäure | 2,1 | 0,4 | 5,4 | 1,2 | 5,4 | 1,2 | 5,1 | 1,0 | 2,0 | 0,4 | |
| Borsäure | 2,2 | 0,4 | 7,0 | 1,5 | 7,0 | 1,5 | 5,2 | 1,0 | 7,7 | 1,5 | |
| Diäthylamin | 2,6 | 0,4 | 8,3 | 1,5 | 8,3 | 1,5 | 1,5 | 0,25 | 3,7 | 0,62 | |
| APB | | | | | | | | | | | 10,0 |
| Wasser | 4,0 | | 4,0 | | 4,0 | | 4,0 | | 4,0 | | 1,0 |

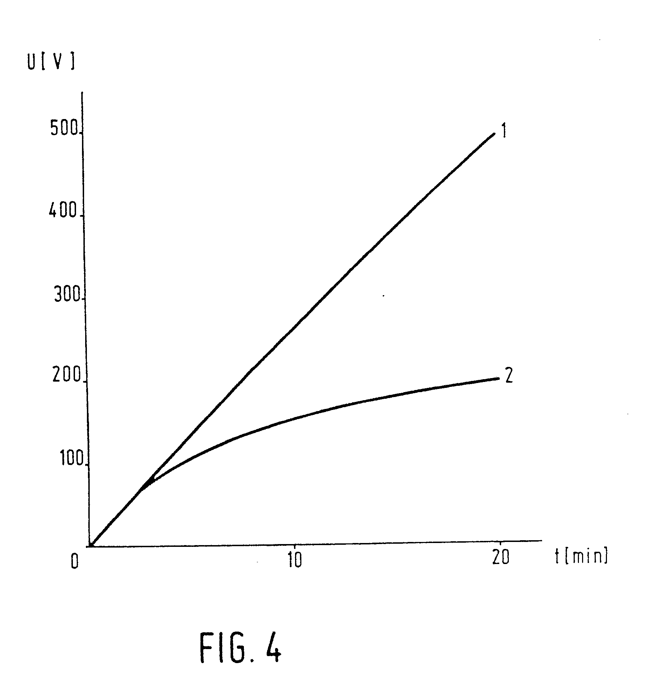

Elektrolytlösung A hat mit 4,0 Gew.% Wasser ein Minimum in dem spezifischen Widerstand als Funktion des Wassergehalts. Ein glatter Aluminiumstreifen mit Abmessungen von $5 \times 1 \text{ cm}^2$ wird mit einem konstanten Strom von 10 mA bei 25 °C in Elektrolytlösung A formiert und ein identischer Streifen in derselben Flüssigkeit, aus der die Borsäure fortgelassen ist. Das Ergebnis ist in Fig. 4 dargestellt und zwar in der Kurve 1 bzw. 2, die die Formierspannung U als Funktion der Zeit t dargestellt.

Die Durchschlagspannung der Lösung A liegt bei 500 V. In der folgenden Tafel 2 ist der spezifische Widerstand $\rho$ in Ohm.cm bei 25 °C der Elektrolytlösungen mit niedrigen und hohen Konzentrationen ionogener Stoffe in unterschiedlichen Lösungsmitteln dargestellt.

Der Wassergehalt beträgt jeweils 4%.

TAFEL 2

| Ionogen | Konzentration Mol/kg Lösungsmittel | Lösungsmittel | $\rho$ (Ohm.cm) | Elektrolyt |
|---|---|---|---|---|
| Essigsäure | 0,4 | DMA | 457 | |
| Borsäure | 0,4 | DMA/NMA 4:1 (Mol) | 405 | A |
| Diäthylamin | 0,4 | | | |
| Essigsäure | 1,2 | DMA | 330 | |
| Borsäure | 1,5 | DMA/NMA 4:1 (Mol) | 317 | B |
| Diäthylamin | 1,5 | DMF | 217 | C |

Elektrolytlösungen auf Basis von nur Dimethylacetamid als Lösungsmittel gefrieren bei −55°C, während die Elektrolytlösungen auf Basis eines Gemisches von Dimethylacetamid und N-Monomethylacetamid und aus Dimethylformamid bei dieser Temperatur noch flüssig sind. Ein hinzukommender Vorteil der Verwendung eines Gemisches aus Dimethylacetamid und N-Monomethylacetamid ist, daß der spezifische Widerstand der damit hergestellten Elektrolytlösung etwas niedriger ist als der einer Lösung mit nur Dimethylacetamid mit denselben gelösten ionogenen Stoffen.

In der nachfolgenden Tafel 3 ist die gemessene Impedanz der Elektrolytkondensatoren mit einer Gebrauchsspannung von 385 V dargestellt bei einer Anzahl Temperaturen. Als Elektrolytlösungen sind diejenigen gewählt worden mit der Konzentration 0,4 m (siehe Tafel 2) und als Lösungsmittel Dimethylacetamid (DMA) und ein Gemisch aus Dimethylacetamid und N-Monomethylacetamid in dem Mol.-Verhältnis 4 : 1 (DMA/NMS).

TAFEL 3

| Temp. °C | Impedanz Z (mΩ) bei 100 kHz | |
| --- | --- | --- |
| Lösungsmittel → | DMA | DMA/NMA |
| +20 | 263 | 247 |
| −25 | 1 000 | 1 070 |
| −40 | 5 330 | 2 290 |
| −55 | 79 500 | 6 680 |

In der Tafel 4 sind die Daten einer Dauerprobe für 385 V-Kondensatoren bei einer Temperatur von 85°C dargestellt. Die Kondensatoren sind auf die übliche Weise aus einer Anodenfolie und einer Kathodenfolie aufgebaut, die mit einer Anschlußzunge versehen sind und zusammen mit einem zwischen den beiden Folien eingefügten porösen Separator aufgewickelt sind. Die Anodenfolie ist gebeizt und daraufhin auf 550 V formiert. Die Kathodenfolie ist nur gebeizt, so daß die Kathodenkapazität viel größer ist als die Kapazität der formierten Anodenfolie. Der erhaltene Wickel wird mit einer der angegebenen Elektrolytlösungen imprägniert, daraufhin in einer Hülle eingebaut und nachformiert. Die Abmessungen der getesteten Elektrolytkondensatoren sind 15 mm Durchmesser und 30 mm Länge.

TAFEL 4

| Elektrolyt-Flüssigkeit | C (μF) | ΔC (%) nach 1000 St. | 2000 St. | $R_s$ (mΩ) | $\Delta R_s$ (%) nach 1000 St. | 2000 St. | Z (mΩ) | ΔZ (%) nach 1000 St. | 2000 St. |
| --- | --- | --- | --- | --- | --- | --- | --- | --- | --- |
| A | 20,0 | 0,9 | 1,0 | 1210 | 0,9 | −4,5 | 236 | −17 | −18 |
| B | 20,0 | 1,4 | 2,0 | 1100 | 3,8 | −2,0 | 185 | −22 | −20 |
| C | 20,1 | 1,1 | 1,9 | 1030 | 18 | 21 | 116 | 10 | 46 |
| D | 19,9 | 0,5 | 1,4 | 1470 | −21 | −29 | 327 | −47 | −51 |
| E | 20,1 | 1,0 | 1,4 | 1240 | −4 | −10 | 283 | −31 | −31 |
| F | 20,2 | 0,7 | 1,6 | 2810 | −48 | −53 | 1190 | −66 | −74 |

Darin ist C die Kapazität, $R_s$ der äquivalente Reihenwiderstand bei 100 Hz und Z die Impedanz bei 100 kHz. Die Elektrolytlösungen sind diejenigen, die in der Tafel 1 näher identifiziert sind mit F als Bezugswert. Die Kondensatoren nach der Erfindung haben einen viel niedrigeren $R_s$ und eine viel niedrigere Z als die Elektrolytlösung F; auch die Stabilität der Kondensatoren nach der Erfindung hat sich gegenüber der bekannten Elektrolytflüssigkeit wesentlich verbessert.

Bei einem anderen Test wurde ein Kondensator mit der Lösung A bei 85°C während 5000 Stunden getestet. Nach Ablauf stellt es sich heraus, daß ΔC, $\Delta R_s$ und ΔZ +2, −8 bzw. −15% betrugen.

Die Tafel 5 zeigt die Ergebnisse einer Dauerprobe bei 125°C eines 63 V-Kondensators, dessen Anode bei 120 V formiert ist und der mit der Lösung A gefüllt ist.

TAFEL 5

| | | | 1000 St. | 2000 St. | 3000 St. |
| --- | --- | --- | --- | --- | --- |
| C (μF) | 321 | ΔC (%) | −4,4 | −5,1 | −5,2 |
| $R_s$ (mOhm) | 273 | $\Delta R_s$ (%) | −9,9 | +7,4 | +7,6 |
| Z (mOhm) | 158 | ΔZ (%) | −8,2 | +13 | +25 |

In der Tafel 6 werden die Ergebnisse einer Dauerprobe bei nicht weniger als 150 °C eines 40 V-

Kondensators gegeben, dessen Anode bei 120 V formiert ist und der mit der Lösung A gefüllt ist.

TAFEL 6

|  |  |  | 1000 St. | 2000 St. |
|---|---|---|---|---|
| C ($\mu$F) | 321 | $\Delta$C (%) | $-6,4$ | $-8,3$ |
| $R_s$ (mOhm) | 273 | $\Delta R_s$ (%) | $+9,2$ | $+43$ |
| Z (mOhm) | 158 | $\Delta$Z (%) | $+15,2$ | $+38$ |

Bei den letztgenannten zwei Dauerproben ist kein Bezugswert mitgenommen, weil mit der bekannten Elektrolytlösung F bei Temperaturen von 125 bzw. 150 °C bereits nach einigen Stunden die genannten Größen sich unzulässig geändert haben. Bei Verwendung der Lösung nach der Erfindung zeigen die Kapazität, der Reihenwiderstand und die Impedanz eine überraschende Stabilität.

**Patentansprüche**

1. Elektrolytischer Kondensator mit einer durch anodische Oxydation mit einer dielektrischen Oxidschicht versehenen Anode, einer Kathode, einem Separator und einer Elektrolytlösung, bestehend aus einer Lösung eines Salzes eines Amins mit einer organischen Carbonsäure und Borsäure in einem Lösungsmittel, bestehend aus einer oder mehreren dipolaren aprotischen Verbindungen, wobei das Lösungsmittel aus einem oder mehreren mono- oder dialkylierten Amiden von Carbonsäuren mit 1, 2 oder 3 Kohlenstoffatomen besteht, dadurch gekennzeichnet, daß in dem Lösungsmittel ein Amin in einer Menge von mindestens 0,20 Mol/kg Lösungsmittel, Essigsäure und/oder Propionsäure in einer Menge von mindestens 0,20 Mol/kg Lösungsmittel und Borsäure in einer Menge von mindestens 0,01 Mol/kg Lösungsmittel gelöst sind, wobei das Amin in einer Menge zwischen nahezu 0,25 bis 1,5 mal der Anzahl Äquivalenten der Essigsäure und/oder der Propionsäure vorhanden ist, und die Borsäure in einer Menge, die höchstens nahezu gleich der fünffachen Anzahl Äquivalenten der Essigsäure und/oder Propionsäure ist, dies und jenes derart, daß eine Leitfähigkeit von mindestens 1 mS/cm bei 25 °C erreicht wird.

2. Elektrolytischer Kondensator nach Anspruch 1, dadurch gekennzeichnet, daß das Lösungsmittel des Elektrolyten aus einem Gemisch von N,N-Dimethylacetamid und N-Monomethylacetamid mit 15 bis 50 Gew.% N-Monomethylacetamid besteht.

**Claims**

1. An electrolytic capacitor comprising an anode provided with a dielectric oxide layer by anodic oxidation, a cathode, a spacer and an electrolyte solution consisting of a solution of a salt of an amine with an organic carboxylic acid and boric acid in a solvent consisting of one or more dipolar aprotic compounds, the solvent consisting of one or more monoalkylated or dialkylated amides of carboxylic acids having 1, 2 or 3 carbon atoms, characterized in that an amine is a quantity of at least 0.20 mol/kg of solvent, acetic acid and/or proprionic acid in a quantity of at least 0.20 mol/kg of solvent, and boric acid in a quantity of at least 0.01 mol per kg of solvent are dissolved in the solvent, the amine being present in a quantity between substantially 0.25 to 1.5 times the number of equivalents of the acetic acid and/or the propionic acid, and the boric acid in a quantity which is at most approximately equal to five times the number of equivalents of the acetic acid and/or the propionic acid, all this in such manner that a conductivity of at least 1 mS/cm at 25 °C is reached.

2. An electrolytic capacitor as claimed in Claim 1, characterized in that the solvent of the electrolyte consists of a mixture of N,N-dimethylacetamide and N-monomethylacetamide with 15–50% by weight of N-monomethylacetamide.

**Revendications**

1. Condensateur électrolytique comportant une anode munie par oxydation anodique d'une couche d'oxyde diélectrique, une cathode, un séparateur et une solution d'électrolyte constituée par une solution d'un sel d'une amine avec un acide carbonique organique et de l'acide borique dans un solvant, constitué par un ou plusieurs composés aprotoniques dipolaires, le solvant étant constitué par un ou plusieurs amides dialkylés d'acides carboniques comptant 1, 2 ou 3 atome(s) de carbone, caractérisé en ce que dans le solvant sont dissous une amine dans une quantité d'au moins 0,20 mole/kg de solvant, de l'acide acétique et/ou de l'acide propionique dans une quantité d'au moins 0,20 mole/kg de solvant et de l'acide borique dans une quantité d'au moins 0,01 mole/kg de solvant, l'amine étant présente dans une quantité comprise entre environ 0,25 à 1,5 fois le nombre d'équivalents de l'acide acétique et/ou de l'acide propionique, le tout de façon que la conductivité d'au moins 1 mS/cm à 25° soit atteinte.

2. Condensateur électrolytique selon la revendication 1, caractérisé en ce que le solvant de l'électrolyte est constitué par un mélange de N-N-diméthylacétamide et de N-monométhylacétamide contentant 15 à 50% en poids de N-monométhylacétamide.

FIG.1

FIG. 2

FIG.3

FIG. 4